# EUROPÄISCHE PATENTANMELDUNG

(11) **EP 1 279 573 A2**
(43) Veröffentlichungstag der Anmeldung: **29.01.2003**
(21) Anmeldenummer: 02012146.3
(22) Anmeldetag: 01.06.2002
(51) Int. Cl.: B60R 21/26

(54) **Sicherheitsvorrichtung für ein Kraftfahrzeug**

(30) Priorität: 25.07.2001 DE 10136173
(71) Anmelder: DaimlerChrysler AG, 70567 Stuttgart (DE)
(72) Erfinder: Reiter, Friedrich, 71069 Sindelfingen (DE); Rüdebusch, Clark, 71272 Renningen (DE)

(57) **Zusammenfassung**

Um eine Sicherheitsvorrichtung (2) für ein Kraftfahrzeug mit einem Gasgenerator sowie einem im Falle eines Unfalls durch den Gasgenerator zu befüllenden Gassack (1), wobei die Sicherheitsvorrichtung (2) mindestens eine Öffnung (3) zum Zu- und/oder Abströmen von Gas hat und Mittel zum Variieren des Strömungswiderstandes der Öffnung (3) vorgesehen sind, zu schaffen, die eine verbesserte Zuverlässigkeit aufweist, wird vorgeschlagen, dass sich die Größe des Strömungswiderstandes in Abhängigkeit von einem an einer bestimmten Stelle der Sicherheitsvorrichtung (2) herrschenden Druck so einstellt, dass der Strömungswiderstand der Öffnung (3) bei steigendem Innendruck vergrößert und bei sinkendem Druck verringert wird.

## Beschreibung

Die Erfindung betrifft eine Sicherheitsvorrichtung für ein Kraftfahrzeug mit einem Gasgenerator sowie einem im Falle eines Unfalls durch den Gasgenerator zu befüllenden Gassack, wobei die Sicherheitsvorrichtung mindestens eine Öffnung zum Zu- und/oder Abströmen von Gas hat und Mittel zum Variieren des Strömungswiderstandes der Öffnung vorgesehen sind.

Eine gattungsbildende Sicherheitsvorrichtung ist beispielsweise aus der EP 0 917 994 A1 bekannt. Die Öffnung des bekannten Gassacks ist im Meridianbereich des Sacks angeordnet. Um die Öffnung ist ein Faden mit einer Schlinge geführt, der in Führungen längenverschieblich angeordnet ist. Die Enden des Fadens sind in dem Bereich des Gassacks angeordnet, der sich beim Eintauchen eines Fahrzeuginsassen erfahrungsgemäß am stärksten dehnt.

Taucht nun ein Fahrzeuginsasse in den gefüllten Gassack ein, woraufhin sich der Sack zumindest in Teilbereichen dehnt, vergrößert sich der Abstand zwischen den beiden Enden des Fadens. Dadurch wird die sich um die Öffnung erstreckende Schlinge zusammengezogen und damit der Querschnitt der Öffnung verkleinert. Die Regelung der Größe des Strömungsquerschnitts und somit des Strömungswiderstandes erfolgt bei der bekannten Sicherheitsvorrichtung also in Abhängigkeit von der Dehnung bestimmter Teilbereiche des Gassacks.

Nachteilig an dieser Sicherheitsvorrichtung ist jedoch, dass die Steuerung nur dann greift, wenn der Fahrzeuginsasse so auf den Gassack trifft, dass die Bereiche gedehnt werden, in denen die Enden des Fadens angeordnet sind. Ist das nicht der Fall - beispielsweise wenn der Insasse beim Entfalten des Gassacks eine "Out Of Position"-Stellung einnimmt - und wird beim Eintauchen ein ganz anderer Bereich des Gassacks beansprucht als normalerweise, so verändert sich der Abstand zwischen den beiden Enden nicht und die gewünschte Regelung bleibt aus. Ein weiterer Nachteil der bekannten Lösung ist darin zu sehen, dass die Realisierung sehr aufwendig ist, will man eine zuverlässige und fehlerfreie Führung des Fadens erzielen.

Weiterhin ist aus dem deutschen Gebrauchsmuster DE 88 00 530 U1 ein Gassack bekannt, dessen Öffnung durch Schließteile aus elastischem, verformbaren Material zugesetzt sind, die eine Ausnehmung aufweisen. Die Ausnehmung in dem Schließteil ändert ihren Querschnitt in Abhängigkeit vom Innendruck im Gaskissen, d.h. bei maximal gefülltem Gassack ist der Querschnitt am größten und bei sich entleerendem Gassack nimmt die Größe des Gassacks kontinuierlich ab. So kann bei einem stark belasteten Gassack viel Gas und bei einem geringen Druck - also einer weniger starken Belastung des Gassacks - wenig Gas entweichen.

Für einen optimalen Schutz von Fahrzeuginsassen ist es jedoch von Vorteil, wenn bei einem starken Unfall und somit einer starken Belastung des Gassacks, dieser härter ist, um mehr Energie zu absorbieren. Bei einem weniger starken Unfall ist ein weicherer Gassack von Vorteil, um unnötige Belastungen des Insassen zu vermeiden. Das gleiche gilt für unterschiedliche Lastfälle aufgrund von unterschiedlich schweren Fahrzeuginsassen.

Vor dem Hintergrund dieses Standes der Technik liegt der vorliegenden Erfindung die Aufgabe zugrunde, eine gattungsgemäße Sicherheitsvorrichtung zu schaffen, bei der die Zuverlässigkeit der Steuerung verbessert und ein optimaler Schutz für die Fahrzeuginsassen geschaffen wird.

Diese Aufgabe wird erfindungsgemäß durch eine Sicherheitsvorrichtung mit den Merkmalen des Anspruchs 1 gelöst.

Demnach zeichnet sich die Erfindung dadurch aus, dass die Regelung des Strömungswiderstandes beispielsweise durch eine Regelung des Strömungsquerschnitts in Abhängigkeit von einem an einer bestimmten Stelle in der Sicherheitsvorrichtung herrschenden Druck erfolgt. Der Druck in dem Gassack spiegelt immer den tatsächlichen Belastungsfall des Airbags wieder. Er ist abhängig davon, wie viel Gas in den Gassack strömt aber auch davon, welche Person, wie stark auf den Airbag auftrifft. Der Druck im Gasgenerator ist von der Phase des Zündens des Airbags abhängig und davon, wie viel Gas schon aus dem Gasgenerator ausgeströmt ist. Somit stellt der Druck im Gassack und im Gasgenerator also an einer bestimmten Stelle in der Sicherheitsvorrichtung eine Größe dar, die eine zuverlässige Aussage über den Zustand der Sicherheitseinrichtung ermöglicht und mit Hilfe der man eine zuverlässige, stufenlose an unterschiedliche Lastfälle anpassende Regelung erzielen kann.

Erfindungsgemäß wird der Strömungswiderstand so geregelt, dass er sich bei steigendem Druck im Sicherheitssystem vergrößert und bei sinkendem Druck verringert. Dadurch ergeben sich folgende Regelungsabläufe bei dem Einsatz der erfindungsgemäßen Sicherheitsvorrichtung. Wird der Gassack stark beansprucht, beispielsweise bei einem starken Unfall oder durch ein hohes Gewicht eines Fahrzeuginsassen, so entsteht in dem Gassack ein hoher Druck, der dazu führt, dass sich der Strömungswiderstand verringert. Dadurch, dass nun weniger Gas austreten kann, bleibt der Airbag hart und kann eine größere Menge an Energie absorbieren.

Wird der Gassack nicht so stark beansprucht, beispielsweise bei einem leichten Unfall oder durch ein leichtes Gewicht eines Fahrzeuginsassen, so entsteht in dem Gassack ein geringerer Druck. Dieser hat zur Folge, dass sich der Strömungswiderstand vergrößert, so dass mehr Gas entweichen kann und sich der Airbag weicher verhält. Das ist bei den geschilderten Lastfällen - leichter Unfall und/oder leichtes Gewicht - von Vorteil, weil es nicht notwendig ist, soviel Energie zu absorbieren und ein zu harter Airbag den Insassen unnötig stark belasten würde.

Das zuvor beschriebene Prinzip kann noch durch die Auswirkungen der Gesetzmäßigkeit der Bernoullischen Druckgleichung, nach der für strömende Fluide die Summe aus dem statische, dem kinetischen und dem geodätischen Druck konstant ist, verstärkt werden. Das bedeutet, dass sich der Strömungswiderstand nicht nur über die Mittel zum Variieren dessen Größe, sondern auch in Abhängigkeit von der Strömungsgeschwindigkeit des durch die Öffnung tretenden Gases einstellt.

Gemäß einer Ausführungsform der Erfindung stellen die Mittel zum Variieren des Strömungswiderstandes diesen selbsttätig ein. Das bedeutet, dass außer den Mitteln zum Variieren des Strömungswiderstandes keine anderen Vorrichtungen zum Regeln und Steuern vorgesehen sind. Dies hat einen einfachen und damit kostengünstigen und weniger anfälligen Aufbau zur Folge. Es ist jedoch auch denkbar, eine Steuer- und/oder Regeleinheit, beispielsweise in elektronischer oder mechanischer Form, vorzusehen, deren Eingangsgröße der Druck in der Sicherheitsvorrichtung ist und die eine geeignete Stellgröße für den Strömungswiderstand als Ausgangsgröße produziert.

Die Öffnung zum Zu- und/oder Abströmen von Gas aus bzw. in die Sicherheitsvorrichtung kann schlauchförmig ausgestaltet sein. Bei einer solchen Form der Öffnung können die Mittel zum Variieren des Strömungswiderstandes besonders günstig angreifen.

Die Mittel zum Variieren des Strömungswiderstandes können mit einer ausgewählten Stelle der Sicherheitsvorrichtung verbunden sein, so dass ein Druckausgleich stattfinden kann. Eine solche Verbindung kann beispielsweise aus einem Schlauch bestehen, der die Komponenten direkt miteinander verbindet. Dadurch wird erzielt, dass sich der Druck, der beispielsweise im Gassack und/oder dem Gasgenerator herrscht, direkt in den Mitteln zum Variieren des Strömungswiderstandes einstellt.

Die Mittel zum Variieren des Strömungswiderstandes sind gemäß einer Ausführungsform als ringförmiger Schlauch ausgebildet, der um die schlauchförmige Öffnung ausgebildet ist. In dieser Position kann der ringförmige Schlauch sehr einfach auf den Querschnitt der Öffnung einwirken. Wenn der Durchmesser des Schlauchs variabel ist, kann über den im Gassack bzw. Gasgenerator herrschenden Druck und damit über den Druck in dem ringförmigen Schlauch dessen Ausdehnung variiert werden. Da der ringförmige Schlauch um die Öffnung geführt ist, hat eine Veränderung der Ausdehnungen des Schlauchs eine Auswirkung auf den Strömungsquerschnitt und somit den Strömungswiderstand der Öffnung. Dazu kann der Schlauch beispielsweise elastisch ausgeführt sein. Es ist aber auch denkbar, dass er eine Faltenstruktur aufweist, die sich je nach dem herrschenden Druck entfaltet oder zusammenfaltet. Durch diese Faltungsvorgänge ändert sich wiederum die Ausdehnung des ringförmigen Schlauchs. Wenn die Ausdehnung des ringförmigen Schlauchs reversibel erfolgt, so lässt sich eine besonders zuverlässige Steuerung erzielen.

In den ringförmigen Schlauch können Ausgleichsöffnungen eingebracht werden, wodurch eine zusätzliche Abstimmungsmöglichkeit geschaffen wird und ein Überdruck justiert werden kann. Der Schlauch kann auch aus einem pneumatischen Muskel bestehen, einem Schlauch, der sich bei Druckänderung verkürzt bzw. verlängert. Wenn andere Steuer- bzw. Regeleinheiten eingesetzt werden, ist auch die Verwendung eines hydraulischen Muskels denkbar.

Gemäß einer weiteren Ausführungsform können die Mittel zum Variieren des Strömungswiderstandes als eine Einheit mit variablem Volumen ausgebildet sein, die in der schlauchförmigen Öffnung liegt. Dehnt sich diese Einheit aus, so verringert sich der Strömungsquerschnitt; zieht sie sich zusammen, so vergrößert sich der Strömungsquerschnitt. Die Einheit kann zum Gassack hin geöffnet sein. Dadurch wird eine direkte Druckausgleichsverbindung zwischen Gassack und Einheit mit variablem Volumen geschaffen. Es ist jedoch auch denkbar, dass die Einheit zusätzlich oder auch ausschließlich mit dem Gasgenerator verbunden ist. Das kann beispielsweise wie in dem zuvor beschriebenen Ausführungsbeispiel über einen Schlauch erfolgen.

Das Ende der Einheit, welches vom Gassack wegweist ist bevorzugt verschlossen, um den durch Gassack und/oder Gasgenerator aufgegebenen Druck zu halten.

Ebenso wie in dem zuvor beschriebenen Ausführungsbeispiel kann die Einheit mit variablem Volumen elastisch ausgeführt sein oder eine Faltenstruktur aufweisen.

Es ist auch denkbar in die Einheit mindestens eine Ausgleichsöffnung einzubringen. Durch diese kann ein in dem Mittel zum Variieren des Strömungsquerschnitts entstehender Überdruck zumindest teilweise abgeführt werden, wodurch für das System eine zusätzliche Abstimmungsmöglichkeit geschaffen wird.

Die Einheit mit variablem Volumen kann innerhalb der schlauchförmigen Öffnung angeordnet sein. Das ein- bzw. ausströmende Gas streicht dann außen an der Einheit vorbei. Damit die Einheit die schlauchförmige Öffnung nicht versperrt, kann sie mit Hilfe von Befestigungsmitteln in der Mitte der Öffnung gehalten werden. Die Einheit kann sich aber auch um den Umfang der schlauchförmigen Öffnung erstrecken bzw. diesen Umfang sogar bilden. In diesem Fall strömt das ein- bzw. ausströmende Gas durch die Einheit hindurch.

Die Mittel zum Variieren können gemäß einer weiteren Ausführungsform auch als in der Öffnung beweglich angeordnete Elemente ausgeführt sein. Je nachdem welche Stellung das Element in der Öffnung einnimmt, ist eine andere Größe des Strömungsquerschnitts freigegeben. Denkbare Ausführungsformen eines solchen beweglich angeordneten Elements können Schieber, Hebel und/oder Klappen sein. Diese können federbeaufschlagt sein um eine selbsttätige Regelung zu ermöglichen. Bei dieser Ausführungsform ist besonders einfach eine Verstärkung bzw. Schwächung des Regeleffektes möglich.

Alle beschriebenen Ausführungsformen können auch miteinander kombiniert werden. Ebenso können alle Ausführungsformen unter anderem bei einer gestuften Befüllung mittels eines mehrstufigen Gasgenerators eingesetzt werden. Die Mittel zum Variieren des Strömungswiderstandes können bezüglich Anzahl, Lage, Geometrie, Material und Formen beliebig ausgestaltet sein.

Im folgenden wird die Erfindung anhand der in der Zeichnung dargestellten Ausführungsbeispielen näher erläutert. Es zeigen:
- Fig.1:: schematische Darstellung einer erfindungsgemäßen Sicherheitsvorrichtung, bei der die Mittel zum Variieren des Strömungswiderstandes als ringförmiger Schlauch ausgebildet sind;
- Fig.2:: Querschnitt einer Öffnung einer Sicherheitsvorrichtung gemäß Fig. 1;
- Fig.3a:: schematische Darstellung einer erfindungsgemäßen Sicherheitsvorrichtung, bei der die Mittel zum Variieren des Strömungswiderstandes als mittig in der Öffnung angeordnete Einheit mit variablem Volumen ausgebildet sind;
- Fig.3b:: Querschnitt einer Öffnung einer Sicherheitsvorrichtung gemäß Fig. 3a;
- Fig. 4:: Querschnitt einer erfindungsgemäßen Sicherheitsvorrichtung, bei der die Mittel zum Variieren des Strömungswiderstandes als um die Öffnung herum angeordnete Einheit mit variablem Volumen ausgebildet sind;
- Fig. 5:: schematische Darstellung einer Sicherheitsvorrichtung mit einem ringförmigen Schlauch als Mittel zum Variieren des Strömungswiderstandes, der sich um eine Zuströmöffnung erstreckt und
- Fig. 6:: schematische Darstellung einer Sicherheitsvorrichtung, bei der die Mittel zum Variieren des Strömungswiderstandes beweglich angeordnetes Element ausgebildet sind.

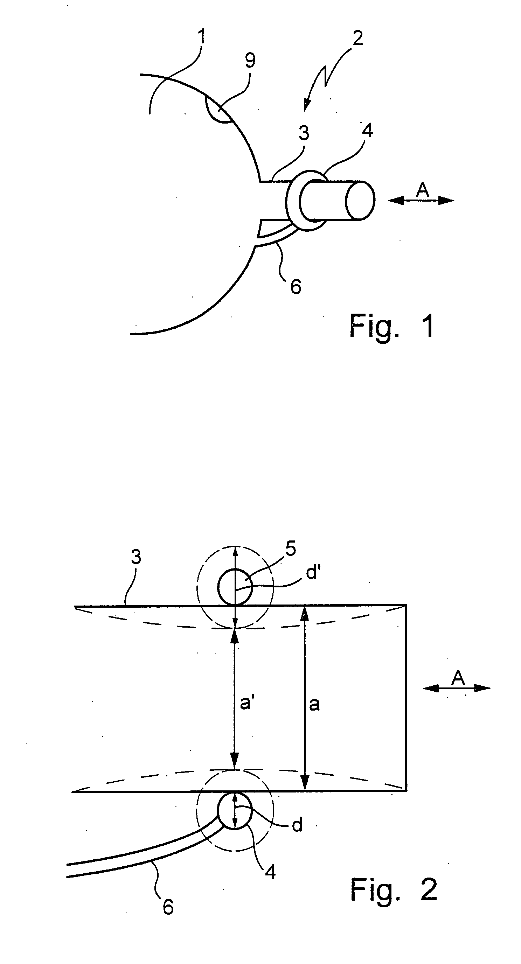

In Fig. 1 ist schematisch ein Gassack 1 einer erfindungsgemäßen Sicherheitsvorrichtung 2 dargestellt. Aus Übersichtlichkeitsgründen wurde auf die Darstellung des Gasgenerators verzichtet. Der Gassack weist eine Öffnung 3 auf. Die Öffnung 3 ist schlauchförmig ausgestaltet. Bei der Öffnung kann es sich um eine Zuström- aber auch um eine Abströmöffnung handeln, so dass Gas in der Öffnung in beide durch den Doppelpfeil A dargestellte Richtungen strömen kann. In den Gassack 1 kann auch noch eine konventionelle Öffnung 9 eingebracht sein.

Um die schlauchförmige Öffnung 3 herum ist ein ringförmiger Schlauch 4 angeordnet. Der Schlauch 4 ist, wie aus Fig. 2 hervorgeht, hohl und umschließt einen Hohlraum 5. Der Schlauch 4 ist über ein ebenfalls hohles Verbindungsmittel 6 mit dem Gassack 1 verbunden. Über das Verbindungsmittel findet ein Druckausgleich zwischen den im Gassack 1 und dem in dem Schlauch 4 herrschenden Druck statt.

Der Schlauch 4 hat einen variablen Durchmesser d bzw. d'. In Fig. 2 sind zwei unterschiedliche Zustände des Schlauchs 4 dargestellt. Die durchgezogene Linie stellt den Schlauch 4 mit einem kleinen Durchmesser d und die gestrichelte Linie stellt den Schlauch 4 mit einem größeren Durchmesser d' dar. Der Schlauch 4 ist so um die Öffnung 3 angeordnet, dass sich die Veränderung des Durchmessers d des Schlauchs 4 auf den Strömungsquerschnitt a und damit auf den Strömungswiderstand der Öffnung 3 auswirkt. Wenn der Durchmesser d des Schlauchs 4 klein ist, ist der Strömungsquerschnitt a der Öffnung maximal und deren Strömungswiderstand minimal; ist der Durchmesser d' des Schlauchs 4 hingegen groß, ist der Strömungsquerschnitt a' der Öffnung 3 klein und deren Strömungswiderstand größer.

Aus dieser Anordnung und Abhängigkeit ergeben sich folgende Regelungsabläufe: Wenn der Druck im Gassack 1 groß ist, so dehnt sich der Schlauch 4 aus, wodurch die Öffnung 3 minimiert wird. Dadurch kann wenig Gas entweichen und der Druck im Gassack 1 bleibt maximal bzw. nimmt weniger stark ab als ohne die Regelung. Je nach Größe des zugeführten Gasstroms, kann der Druck auch zunehmen. Dieser Zustand ergibt sich beispielsweise bei einem starken Unfall, wenn also der Insasse mit einer großen Kraft in den Airbag gedrückt wird oder aber auch bei einem Insassen mit einem großen Gewicht. Für diesen Lastfall bietet ein harter Gassack 1 den optimalen Schutz, weil er die große Last auffängt und gleichzeitig einen großen Betrag an Energie absorbieren kann.

Wenn der Druck im Gassack 1 klein ist, so dehnt sich der Schlauch 4 nicht und der Strömungsquerschnitt a ist maximal. Es kann viel Gas entweichen. Dieser Fall tritt bei einem leichten Unfall oder einem leichten Insassen auf. Bei einem solchen Lastfall wird der Gassack 1 nicht sehr stark belastet, so dass der Druck nicht sehr stark ansteigt. In diesen Fällen ist ein nicht so stark gefüllter Gassack von Vorteil, weil dann keine unnötigen Belastungen des Insassen auftreten.

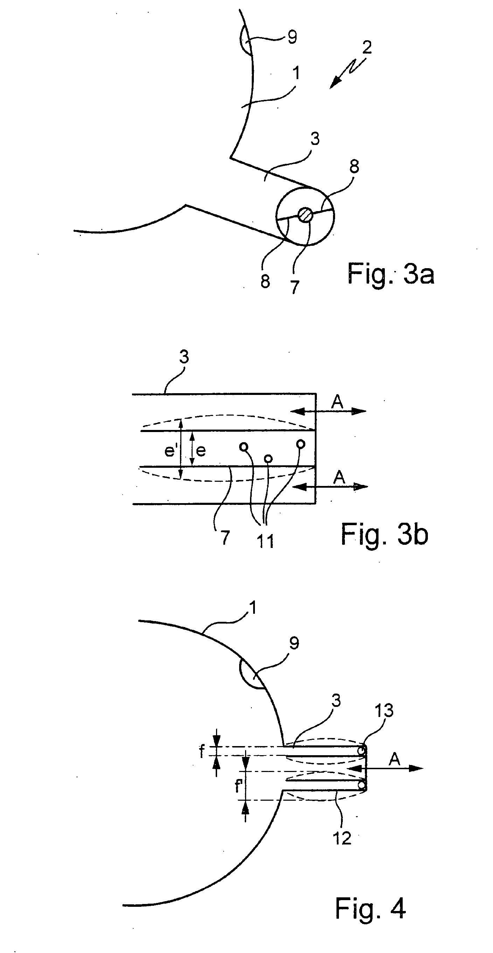

In den Fig. 3a und 3b ist ein weiteres Ausführungsbeispiel der erfindungsgemäßen Sicherheitsvorrichtung 2 dargestellt. Diese zeichnet sich dadurch aus, dass die Mittel zum Variieren des Strömungsquerschnitts aus einem Schlauch 7 bestehen. Der Schlauch 7 ist in der Mitte der Öffnung 3 angeordnet, so dass sich der Strömungsquerschnitt der Öffnung 3 aus der Fläche zusammensetzt, die um den Schlauch 7 angeordnet ist. Der Schlauch 7 ist zum Gassack 1 hin geöffnet, so dass der in dem Gassack herrschende Druck direkt auf den Schlauch 7 übertragen wird. Es ist auch denkbar, dass der Schlauch 7 direkt oder über ein geeignetes Verbindungsmittel mit einem nicht dargestellten Gasgenerator verbunden ist. Der Schlauch 7 kann über Befestigungsmittel 8 mit der Öffnung 3 verbunden sein, so dass er seine mittlere Position beibehält und den Strömungsquerschnitt nicht blockiert.

Wie in Fig. 3b durch eine gestrichelte Linie dargestellt ist der Durchmesser e des Schlauchs 7 variabel. Er kann sich auf einen Durchmesser e' ausdehnen. Durch eine Veränderung des Durchmessers e des Schlauchs 7 verändert sich der Strömungsquerschnitt der Öffnung 3. Der Regelungszusammenhang ist bei dieser Ausführungsform der selbe, wie bei der zuvor beschriebenen. Bei einem hohen Druck im Gassack 1 oder im Gasgenerator verringert sich der Strömungsquerschnitt und umgekehrt. In den Schlauch 7 können Ausgleichslöcher 11 eingebracht sein.

In dem in Fig. 4 dargestellten Ausführungsbeispiel sind die Mittel zum Variieren des Strömungsquerschnitts als sich um den Umfang der Öffnung 3 erstreckendes Schlauchelement 12 ausgestaltet. Sie sind wiederum zum Gassack 1 hin offen, um den notwendigen Druckausgleich zu ermöglichen. Dies ist jedoch auch wieder über andere geeignete Druckausgleichsmittel möglich. Das andere Ende des Schlauchelements 12 ist geschlossen. Es können jedoch auch wieder Ausgleichsöffnungen 13 vorgesehen sein. Durch die gestrichelte Linie sind die sich verändernden Ausmaße f und f' des Schlauchelements 12 dargestellt, die einen Einfluss auf die Größe des Strömungsquerschnitts der Öffnung 3 haben.

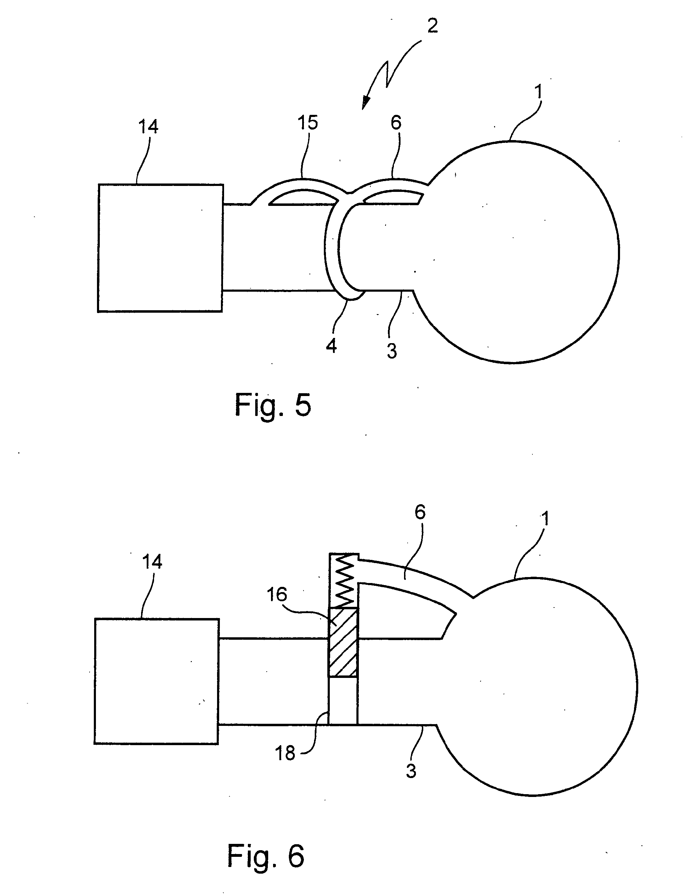

In Fig. 5 ist ein dem in Fig. 1 entsprechendes ringförmiger Schlauch 4 dargestellt, der um eine Öffnung 3 angeordnet ist. In dem dargestellten Fall handelt es sich um eine Zuströmöffnung 3, die die Verbindung zwischen einem Gasgenerator 14 und dem Gassack 1 herstellt. Der Schlauch 4 ist hier nicht nur über das Verbindungselement 6 mit dem Gassack 1, sondern auch über ein weiteres Verbindungselement 15 mit dem Gasgenerator 14verbunden. Die Verbindungselemente 6 und 15 können auch mit externen Anströmvorrichtungen und/oder Strömungsfiltern und/oder Steuer-/Regelvorrichtungen wie z.B. Klappen versehen sein. Mit Hilfe dieser Anordnung kann ein - häufig in der Anfangsphase des Zünden des Airbags auftretender - hoher Druck im Gasgenerator gedrosselt werden. Durch den hohen Druck im Gasgenerator vergrößert sich nämlich der Durchmesser des Schlauchs 4, wodurch die Öffnung 3 eingeengt wird. Dies wiederum verhindert, das der hohe Druck des Gasgenerators 14 direkt in den Gassack 1 weitergeleitet wird, da zunächst nur ein geringerer Gasstrom in den Gassack 1 eintreten kann. Beim anschließenden Abblasen des Luftsacks kann dies über die gleiche Regelvorrichtung, die zum Aufblasen verwendet wird erfolgen. Über eine strömungsrichtungsabhänige Steuerung kann die Regelcharakteristik verändert und eine Abströmöffnung freigegeben werden, die beim Aufblasvorgang geschlossen sein kann.

In Fig. 6 ist ein weiteres Ausführungsbeispiel dargestellt. Dieses unterscheidet sich von den zuvor beschriebenen Ausführungsbeispielen dadurch, dass die Mittel zum Variieren des Strömungsquerschnitts als in der schlauchförmigen Öffnung 3 bewegliches Element 16 ausgeführt sind. Das Element 16 hat hier die Form eines Schiebers. Dieser ist mittels einer Feder 17 beaufschlagt und in einer Führung 18 gelagert. Der Schieber 16 ist über eine Leitung 6 mit dem Gassack 1 verbunden, so dass der in dem Gassack 1 herrschende Druck direkt auf den Schieber 16 wirkt. Es ist auch denkbar, dass ein weiteres Verbindungselement vorgesehen ist, welches vom Gasgenerator 14 zum Schieber 16 geführt ist und dadurch den zuvor geschilderten Regelungseffekt erzielt. Bei steigendem Druck in dem Gassack 1 bewegt sich der Schieber in Richtung Schließstellung, so dass der Strömungsquerschnitt der Öffnung 3 verringert wird. Der Schieber 16 wird dabei gegen die Kraft der Feder 17 bewegt. Sobald der Druck nachlässt, bewegt sich der Schieber 16 aufgrund der Federkraft wieder in Richtung einer Öffnungsstellung und gibt dadurch den Strömungsquerschnitt wieder frei.

Ein vollständiges Verschließen der Öffnung 3 kann durch eine in die Öffnung eingebrachte Vorrichtung verhindert werden, die ein minimale Leckage sicherstellt, zum Beispiel ein Abstandshalter in einer geeigneten Form wie beispielsweise einer Kreuzform. Über diese Elemente ist auch eine zusätzliche Abstimmung des Systems möglich. Des weiteren wird dadurch ein pulsierendes Ausströmverhalten ("Flattern") verhindert bzw. reduziert.

Zur Verstärkung des zunehmenden Strömungswiderstandes können strömungsstörende Maßnahmen in die Öffnung eingesteuert werden. Damit kann auch ein Übergang von laminarer zu turbulenter Strömung und somit ein sprunghafter Anstieg des Strömungswiderstandes erreicht werden.

## Patentansprüche

1. Sicherheitsvorrichtung für ein Kraftfahrzeug mit einem Gasgenerator sowie einem im Falle eines Unfalls durch den Gasgenerator zu befüllenden Gassack, wobei die Sicherheitsvorrichtung mindestens eine Öffnung zum Zu- und/oder Abströmen von Gas hat und Mittel zum Variieren des Strömungswiderstandes der Öffnung vorgesehen sind,
**dadurch gekennzeichnet, dass**
sich die Größe des Strömungswiderstandes in Abhängigkeit von einem an einer bestimmten Stelle der Sicherheitsvorrichtung herrschenden Druck so einstellt, dass der Strömungswiderstand der Öffnung (3) bei steigendem Innendruck vergrößert und bei sinkendem Druck verringert wird.

2. Sicherheitsvorrichtung nach Anspruch 1,
**dadurch gekennzeichnet, dass**
die Mittel zum Variieren des Strömungswiderstandes diesen selbsttätig einstellen.

3. Sicherheitsvorrichtung nach Anspruch 1 oder 2,
**dadurch gekennzeichnet, dass**
die Öffnung (3) schlauchförmig ist.

4. Sicherheitsvorrichtung nach einem der vorhergehenden Ansprüche,
**dadurch gekennzeichnet, dass**
die Mittel zum Variieren des Strömungswiderstandes mit dem Gassack (1), dem Gasgenerator (14) und/oder Zuleitungen verbunden sind, so dass zwischen diesen Komponenten ein Druckausgleich stattfindet.

5. Sicherheitsvorrichtung nach einem der vorhergehenden Ansprüche,
**dadurch gekennzeichnet, dass**
die Mittel zum Variieren des Strömungswiderstandes als ringförmiger Schlauch (4) ausgebildet sind, der um die schlauchförmige Öffnung (3) geführt ist.

6. Sicherheitsvorrichtung nach Anspruch 5,
**dadurch gekennzeichnet, dass**
der Durchmesser (d) des Schlauchs (4) variabel ist.

7. Sicherheitsvorrichtung nach Anspruch 5 oder 6,
**dadurch gekennzeichnet, dass**
der Schlauch (4) elastisch ausgeführt ist.

8. Sicherheitsvorrichtung nach Anspruch 5 oder 6,
**dadurch gekennzeichnet, dass**
der Schlauch (4) eine Faltenstruktur aufweist.

9. Sicherheitsvorrichtung nach Anspruch 5 bis 8,
**dadurch gekennzeichnet, dass**
in den Schlauch (4) mindestens eine Ausgleichsöffnung eingebracht ist.

10. Sicherheitsvorrichtung nach einem der Ansprüche 1 bis 4,
**dadurch gekennzeichnet, dass**
die Mittel zum Variieren des Strömungswiderstandes als in der schlauchförmigen Öffnung (3) liegende Einheit (7, 12) mit variablen Volumen ausgebildet sind.

11. Sicherheitsvorrichtung nach Anspruch 10,
**dadurch gekennzeichnet, dass**
die Einheit (7, 12) zum Gassack (1) hin offen und an seinem vom Gassack wegweisenden Ende verschlossen ist.

12. Sicherheitsvorrichtung nach Anspruch 10 oder 11,
**dadurch gekennzeichnet, dass**
die Einheit (7, 12)elastisch ausgeführt ist.

13. Sicherheitsvorrichtung nach Anspruch 10 oder 11,
**dadurch gekennzeichnet, dass**
die Einheit (7, 12) eine Faltenstruktur aufweist.

14. Sicherheitsvorrichtung nach einem der Ansprüche 10 bis 13,
**dadurch gekennzeichnet, dass**
in die Einheit (7, 12) mindestens eine Ausgleichsöffnung (11, 13) eingebracht ist.

15. Sicherheitsvorrichtung nach einem der Ansprüche 10 bis 14,
**dadurch gekennzeichnet, dass**
die Einheit (7) innerhalb der schlauchförmigen Öffnung (3) angeordnet ist.

16. Sicherheitsvorrichtung nach einem der Ansprüche 10 bis 14,
**dadurch gekennzeichnet, dass**
die Einheit (12) sich entlang des Umfangs der schlauchförmigen Öffnung (3) erstreckt.

17. Sicherheitsvorrichtung nach einem der Ansprüche 1 bis 4,
**dadurch gekennzeichnet, dass**
die Mittel zum Variieren des Strömungswiderstandes als in der Öffnung beweglich angeordnetes Element (16) ausgeführt sind.

18. Sicherheitsvorrichtung nach Anspruch 17,
**dadurch gekennzeichnet, dass**
das beweglich angeordnete Element als Schieber, Hebel und/oder Klappe ausgeführt ist.

19. Sicherheitsvorrichtung nach Anspruch 17 oder 18,
**dadurch gekennzeichnet, dass**
das beweglich angeordnete Element (16) federbeaufschlagt ist.

20. Sicherheitsvorrichtung nach einem der vorhergehenden Ansprüche,
**dadurch gekennzeichnet, dass**
eine strömungsrichtungsabhängige Charakteristik der Regelung erfolgt.
